# EUROPÄISCHE PATENTSCHRIFT

(11) **EP 3 348 346 B1**
(45) Veröffentlichungstag und Bekanntmachung des Hinweises auf die Patenterteilung: **13.02.2019**
(21) Anmeldenummer: 17151216.3
(22) Anmeldetag: 12.01.2017
(51) Int. Cl.: B26D 3/16, B29D 23/00, B23P 19/02, B23P 21/00

(54) **VERFAHREN UND VORRICHTUNG ZUR HERSTELLUNG VON VERBINDUNGSSCHLÄUCHEN**
METHOD AND DEVICE FOR PRODUCING CONNECTION HOSES
PROCÉDÉ ET DISPOSITIF DE PRODUCTION DE TUYAUX FLEXIBLES DE RACCORDEMENT

(43) Veröffentlichungstag der Anmeldung: 18.07.2018
(73) Patentinhaber: KNAPHEIDE GmbH Hydraulik-Systeme, 59269 Beckum (DE)
(72) Erfinder: Mischke, Wolfgang, 48727 Billerbeck (DE); Knapheide, Kai Uwe, 59269 Beckum (DE)
(74) Vertreter: Patentanwälte Dörner & Kötter PartG mbB

(56) Entgegenhaltungen:
- EP-A2- 0 243 673
- EP-A2- 0 405 658
- CN-A- 102 886 674
- GB-A- 2 052 674
- JP-A- 2016 087 737

## Beschreibung

Die Erfindung betrifft eine Vorrichtung zur Herstellung von Verbindungschläuchen, insbesondere für hydraulische Zwecke nach dem Oberbegriff des Patentanspruchs 1. Eine solche Vorrichtung ist aus JP 2016 087 737 A bekannt. Ebenfalls offenbart JP 2016 087 737 A ein Verfahren gemäß dem Oberbegriff des Anspruchs 8.

Verbindungschläuche im Bereich der Hydraulik sind regelmäßig an ihren Enden mit Anschlussarmaturen versehen. Bei der Applikation solcher Hydraulikschläuche mit winkligen Armaturen besteht die Anforderung, den abstehenden Schenkel einer Winkelarmatur in einem bestimmten Winkel zur natürlichen Krümmung des Hydraulikschlauches zu montieren. Als natürliche Krümmung wird die Biegung eines Hydraulikschlauchs bezeichnet, welche diese einnimmt, wenn er frei von äußeren Kräften ist. Die natürliche Krümmung wird durch den Herstellprozess des auf Haspeln aufgewickelten Hydraulikschlauchs verursacht. Die so genannte Null-Grad-Sehne der natürlichen Krümmung des Hydraulikschlauches befindet sich auf der Linie des kleinsten Radius der Krümmung auf dem Schlauch. Bei den einzustellenden Winkeln der winkligen Armaturen wird unterschieden zwischen dem Winkel des Schenkels einer ersten Armatur zu Null-Grad-Sehne der natürlichen Krümmung des Schlauches, regelmäßig als "K-Winkel" bezeichnet -, sowie dem Winkel, dem die Schenkel von zwei endseitig montierten winkligen Armaturen zueinander einnehmen - den so genannten "V-Winkel". Die Stellung der ersten Armatur ist dabei durch den K-Winkel festgelegt, der V-Winkel referenziert damit den K-Winkel.

Zur Einstellung der vorgenannten Winkel bei der Herstellung eines Hydraulikverbindungsschlauchs ist es erforderlich, die Null-Grad-Sehne der natürlichen Krümmung des Schlauchs als Referenz zu bestimmen. Auf Basis dieser Referenz können dann K- und V-Winkel eingestellt werden. Hierzu wird ein gekrümmter Schlauchabschnitt vor eine Winkelscheibe gehalten, derart, dass die Schlauchkrümmung im Zentrum der Winkelscheibe auf den Bediener zeigt. Nachfolgend wird auf der Winkelscheibe der gewünschte K-Winkel eingestellt und die Armatur wird in optische Deckung mit der Winkelscheibe gedreht und nachfolgend verpresst. Diese Vorgehensweise gestaltet sich jedoch als sehr aufwendig und nur mäßig genau, da der tatsächlich eingestellte Winkel auch von der subjektiven optischen Wahrnehmung des Bedieners abhängt. Es wurden Versuche gemacht, die Bestimmung der Null-Grad-Sehne über eine Handhabungseinheit (Roboter) in Kombination mit einer Bildverarbeitung vorzunehmen, um eine weitgehende Automatisierung des Herstellungsprozesses zu erzielen. Dieser Ansatz erwies sich jedoch als sehr kostenintensiv und wurde nicht weiterverfolgt.

Zur genaueren Ermittlung der Null-Grad-Sehne der natürlichen Krümmung eines Schlauchabschnitts ist es weiterhin bekannt, diesen in eine V-förmige Aufnahme einzulegen, derart, dass er sich im Gleichgewicht befindet. Nachfolgend werden die endseitigen Winkelarmaturen mittels einer aufwendigen Messvorrichtung auf den gewünschten Winkel eingestellt. Diese Vorgehensweise gestaltet sich jedoch als sehr aufwendig und ist lediglich für den Bereich der Qualitätssicherung einsetzbar.

Hier will die Erfindung Abhilfe schaffen. Der Erfindung liegt die Aufgabe zu Grunde, eine Vorrichtung zur Herstellung von Verbindungschläuchen, insbesondere für hydraulische Zwecke bereitzustellen, die eine aufwandminimierte und zugleich genauere Positionierung von Winkelarmaturen an einem gekrümmten Schlauchabschnitt ermöglicht. Gemäß der Erfindung wird diese Aufgabe durch eine Vorrichtung mit den Merkmalen des Patentanspruchs 1 gelöst. Erfindungswesentlich ist hierbei, dass ein abgelängter gekrümmter Schlauchabschnitt im freien Fall auf eine ebene Fläche ablegbar ist. Hierdurch ergibt sich der erfindungswesentliche Effekt, dass durch das Ablegen des Schlauchstücks ohne äußere Krafteinwirkung ein selbsttätiges Ausrichten erfolgt, wonach die Null-Grad-Sehne des Schlauchstücks parallel zur ebenen Fläche angeordnet ist. Die sonstige Ausrichtung des Schlauchstücks kann dann durch eine optische Kontrolleinheit erfolgen. Durch die auf diese überraschend einfache Art und Weise erzielte Referenzlage ist eine definierte Schlauchaufnahme mittels eines Greifers ermöglicht, wodurch eine im Wesentlichen automatisierte Applikation eines gekrümmten Schlauchabschnitts mit Winkelarmaturen ermöglicht ist.

Bevorzugt ist die ebene Fläche im Wesentlichen horizontal angeordnet, da hier auf die Krümmung des Schlauchabschnitts keine äußeren Kräfte einwirken. Die Gewichtskraft wirkt orthogonal zur ebenen Fläche. Es ist auch möglich, den Schlauchabschnitt auf eine geneigte ebene Fläche abzulegen, welche einen Anschlag aufweist. Der Schlauchabschnitt liegt hier ebenfalls an der ebenen Fläche an und rutscht bis zu einem sinnvollerweise angeordneten Anschlag, wo er dann von einem Greifer aufgenommen werden kann. In diesem Fall wirkt ein Teil der Gewichtskraft auf die Krümmung des Schlauchabschnitts ein. Die sich hierdurch ergebene Verwerfung ist jedoch gering und sollte im Regelfall tolerierbar sein.

In Weiterbildung der Erfindung ist eine optische Kontrolleinheit zur Feststellung des Lagesinns des Schlauchabschnitts vorhanden. Hierdurch ist eine lagegerechte Zuführung eines Greifers zur Schlauchaufnahme ermöglicht.

In weiterer Ausgestaltung der Erfindung ist eine Markierungsvorrichtung zum Aufbringen einer Referenzmarke auf dem abgelegten Schlauchabschnitt angeordnet. Hierdurch ist eine optische Markierung der Referenzlage bewirkt, wodurch die lagegerechte Zustellung des gekrümmten Schlauchabschnitts zur Applikation einer winkligen Armatur erzielt ist.

In weiterer Ausgestaltung der Erfindung ist der Presseinheit vorgelagert ein Schälmodul zur endseitigen Außendurchmesserreduzierung eines von einem Greifer zugeführten Schlauchabschnitts angeordnet. Hierdurch ist eine automatisierte partielle Durchmesserreduzierung des Schlauchabschnitts für die anschließende Montage der winkligen Armatur ermöglicht.

In Weiterbildung der Erfindung umfasst die Presseinheit ein Werkzeugrevolvermagazin zur Applizierung von Armaturen unterschiedlicher Winkel und Durchmesser. Hierdurch ist eine weitgehend automatisierte Montage von unterschiedlichen Armaturen auf zugeführte Schlauchabschnitte ermöglicht.

In Ausgestaltung der Erfindung ist eine zweite Presseinrichtung angeordnet, wobei das Transfersystem zu definierten Rotation eines aufgenommenen Schlauchabschnitts eingerichtet ist. Dabei umfasst das Transfersystem vorteilhaft einen zweiten Greifer, vorzugsweise einen Radialgreifer zu definierten Rotation eines von dem ersten Greifer aufgenommenen Schlauchabschnitts. Hierdurch ist eine In-Line-Montage von winklig zueinander ausgerichteten Armaturen an beiden Enden eines Schlauchabschnitts ermöglicht. Ein in definierter Lage von dem Greifer aufgenommener, mit einer ersten Armatur versehener Schlauchabschnitt kann so um den gewünschten V-Winkel rotiert werden, bevor sodann die Montage der zweiten winkligen Armatur an dem freien Schlauchende erfolgt.

Der vorliegenden Erfindung liegt weiterhin die Aufgabe zugrunde, ein Verfahren zur endseitigen Bestückung eines gekrümmten Schlauchabschnitts mit einer abgewinkelten Armatur für die Herstellung von Verbindungsschläuchen, insbesondere für hydraulische Zwecke bereitzustellen, das eine aufwandminimierte und zugleich genauere Positionierung der Winkelarmatur an einem gekrümmten Schlauchabschnitt ermöglicht. Gemäß der Erfindung wird diese Aufgabe durch ein Verfahren mit den Merkmalen des Patentanspruchs 8 gelöst. Erfindungswesentlich ist hier wiederum, dass der Schlauchabschnitt zunächst im freien Fall auf eine horizontale Ebene verbracht wird, wodurch sich der erfindungswesentliche Effekt einstellt, dass ohne äußere Kraftwirkung ein selbsttätiges Ausrichten erfolgt, wonach die Null-Grad-Sehne des Schlauchstücks parallel zur ebenen Fläche angeordnet ist. In dieser Referenzlage wird nachfolgend der Schlauchabschnitt von einem ersten Greifer aufgenommen und sodann in dem gewünschten K-Winkel zu Null-Grad-Sehne rotiert, wonach die abgewinkelte Armatur auf ein Ende des definiert positionierten Schlauchabschnitts aufgebracht wird. Dieses Verfahren kann vollautomatisch durchgeführt werden. Die im Stand der Technik erforderliche manuelle Ausrichtung des Schlauchabschnitts entsprechend seiner Null-Grad-Sehne vor einer Winkelscheibe ist nicht mehr erforderlich.

In Weiterbildung der Erfindung wird der an einem Ende mit einer ersten abgewinkelten Armatur versehene Schlauchabschnitt um einen definierten Winkel relativ zur Ausgangsstellung (V-Winkel) weiter rotiert, wonach das freie Ende des Schlauchabschnitts mit einer zweiten abgewinkelten Armatur versehen wird. Dabei wird der mit einer ersten abgewinkelten Armatur versehene Schlauchabschnitt bevorzugt von einem Radialgreifer aufgenommen, wonach der erste Greifer den Schlauchabschnitt freigibt und der Schlauchabschnitt über den Radialgreifer um den gewünschten V-Winkel rotiert wird, wonach der Schlauchabschnitt von dem ersten Greifer eingespannt und anschließend von dem Radialgreifer freigegeben wird, wonach die Applikation des Schlauches mit der zweiten abgewinkelten Armatur erfolgt. Hierdurch ist eine durchgehend definierte Stellung des Schlauchs gewährleistet. Nach der Applikation der ersten winkligen Armatur entspricht die Rotation des von dem ersten Greifer an den Radialgreifer übergehenden Schlauchabschnitts exakt dem gewünschten V-Winkel.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die schematische Darstellung einer Fertigungslinie zur Herstellung von Verbindungsschläuchen;
- Figur 2: die schematische Darstellung der Ablängeinheit der Fertigungslinie aus Figur 1;

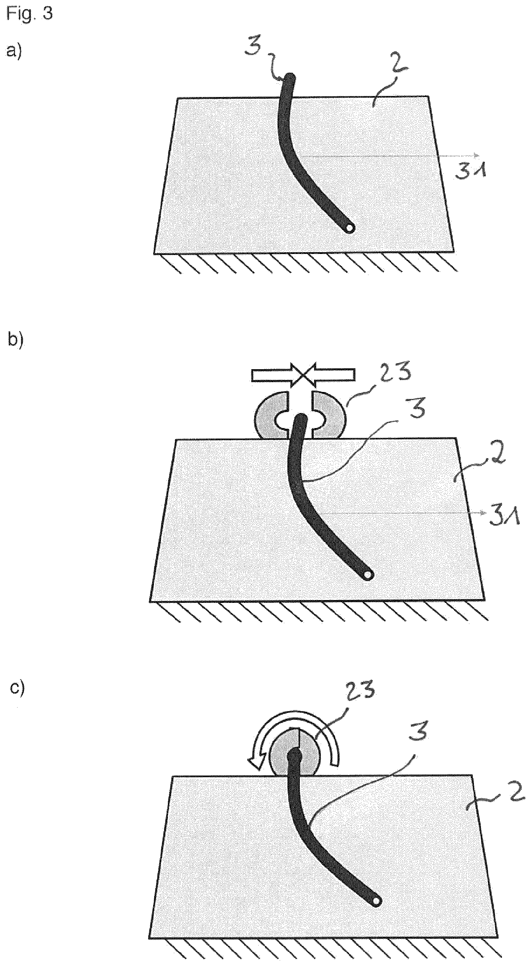

- Figur 3: die schematische Darstellung der Transfergleitebene der Fertigungslinie aus Figur 1 mit ausgerichtetem Schlauchabschnitt
a) nach Auftreffen des Schlauchabschnitts auf die Transfergleitebene;
b) mit angestelltem Rotationsgreifer zur Aufnahme des Schlauchabschnitts;
c) nach Aufnahme des Schlauchabschnitts durch den Rotationsgreifer;

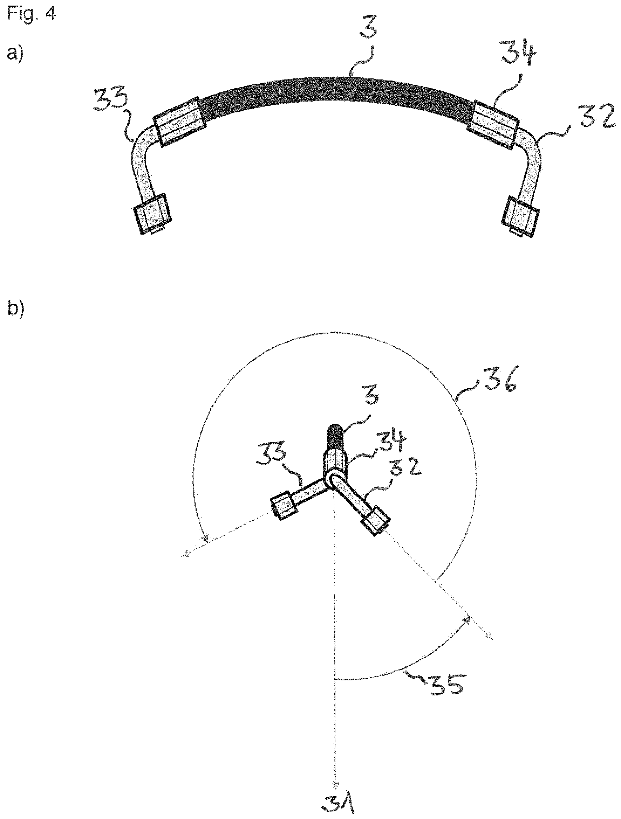

- Figur 4: die schematische Darstellung eines Verbindungsschlauchs mit endseitigen winkligen Armaturen
a) in der Seitenansicht;
b) in der Ansicht von vorne;

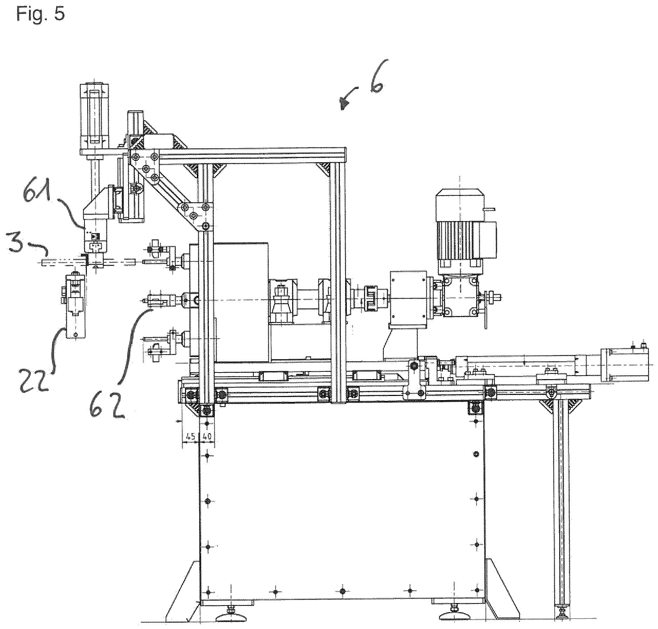

- Figur 5: die schematische Darstellung einer Schälstation der Fertigungslinie aus Figur 1;

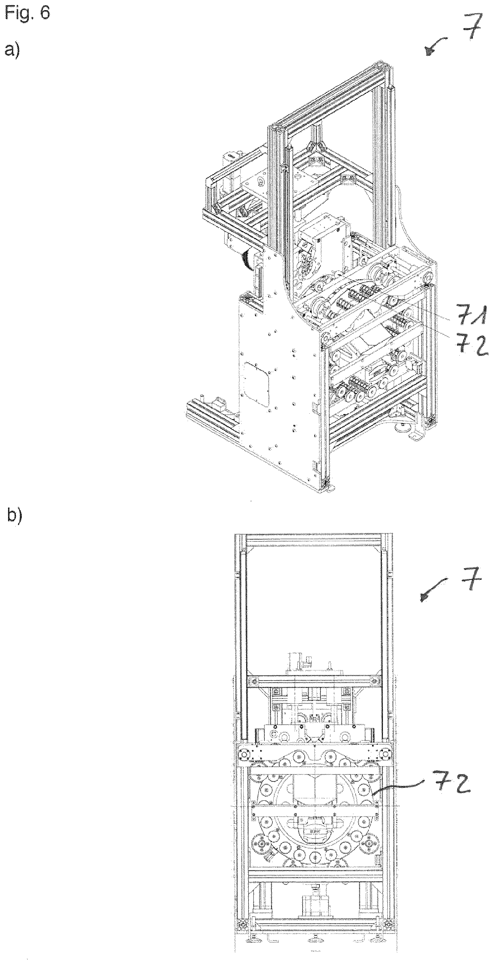

- Figur 6: die schematische Darstellung einer Pressstation der Verbindungslinie aus Figur 1
a) in räumlicher Darstellung;
b) in der Ansicht von vorne.

Die als Ausführungsbeispiel gewählte Vorrichtung zur Herstellung von Verbindungsschläuchen ist in Art einer Fertigungslinie ausgebildet. Sie umfasst im Wesentlichen eine über eine Zuführeinrichtung 12 mit einem Coilmagazin 11 verbundene Ablängeinheit 1 und eine Transfergleitebene 2, die über ein Transfersystem 21 mit einer Reinigungsstation 4, einer Schutzschlauchstation 5, einer Schälstation 6, eine Presseinheit 7 sowie einer Wendevorrichtung 8 verbunden ist, an die sich wiederum eine weitere Schälstation 6, eine weitere Presseinheit 7 sowie eine Laserbeschriftungsstation 9 anschließen.

Die Ablängeinheit 1 weist ein mit einer Längenmessung versehenes Schlauchvorschubmodul 13 auf, an das sich eine Schneideinheit 14 anschließt, über die vom Coilmagazin 11 über die Zuführeinrichtung 12 zugeführtes Schlauchmaterial abgelängt wird. Der Führungstisch 15 der Ablängeinheit 1 bildet mit der vertikal zu diesem angeordneten Transfergleitebene 2 eine Ausrichteinheit. Nachdem ein Schlauchabschnitt 3 über die Schneideinheit 4 abgelängt worden ist, fällt dieser im freien Fall auf die Transfergleitebene 2, wodurch ein selbsttätiges Ausrichten des Schlauchabschnitts 3 erfolgt. Bei dem so abgelegten Schlauchabschnitt 3 befindet sich die Null-Grad-Sehne des Schlauchabschnitts 3 parallel zur ebenen Fläche. Hierbei ist der Schlauchabschnitt 3 derart positioniert, dass er über die Transfergleitebene 2 hinausragt. An seinem über die Transfergleitebene 2 hinausragen Ende kann der Schlauchabschnitt 3 nun in seiner bekannten, definierten Position von einem Greifer 22 des Transfersystems 21 aufgenommen werden.

Das so von dem Greifer 22 definiert aufgenommene Schlauchstück wird nun entlang des Transfersystems 21 zunächst der Reinigungsstation 4 zugeführt, wo in bekannter Art und Weise ein Schaumstoffprojektil mittels Druckluft durch den Schlauchabschnitt 3 hindurchgeschossen wird. Nachfolgend wird der Schlauchabschnitt 3 der Schutzschlauchstation 5 zugeführt, wo er mit einem Schutzschlauch überzogen wird. Hierbei wird ein gefalteter Textilschlauch vom Coil einem Rollensystem zugeführt, über das der Textilschlauch an seinen gegenüberliegenden Knickkanten zusammengedrückt wird, wodurch der Textilschlauch geöffnet über den Schlauchabschnitt 3 geschoben wird.

Der so mit einem Schutzschlauch überzogene Schlauchabschnitt 3 wird sodann über das Transfersystem 21 der Schälstation 6 zugeführt. An der Schälstation 6 wird der Schlauchabschnitt 3 von dem ersten Greifer 22 in definierter Position an den Parallelgreifer 61 der Schälstation übergeben, über den die Zuführung des Schlauchabschnitts 3 zum Schälwerkzeug 62 erfolgt. Nach erfolgter Durchmesserreduzierung des einen Endes des Schlauchabschnitts 3 erfolgt wiederum eine Übergabe des Schlauchabschnitts 3 von dem Parallelgreifer 61 der Schälstation 6 an den ersten Greifer 22 des Transfersystems 21, über den der Schlauchabschnitt 3 der Presseinheit 7 zugeführt wird.

Die Presseinheit 7 ist mit einem Presswerkzeug 1 sowie einem Werkzeugrevolvermagazin 72 ausgestattet, in dem radial umlaufend verschiedene Aufnahmematrizen für unterschiedlich ausgebildete Armaturen angeordnet sind. Über eine - nicht dargestellte - Steuereinheit wird das Werkzeugrevolvermagazin 72 derart positioniert, dass sich die jeweils erforderliche Matrize in der vertikal oberen Position befindet. Die zur applizierende Armatur wird dem Bediener nun über ein Pick-by-Light-Modul 73 angezeigt. Diese Armatur 32 wird zusammen mit einer Presshülse 34 nachfolgend von einem Bediener in die vertikal oben positionierte Matrize des Werkzeugrevolvermagazins 72 eingelegt. Nachfolgend wird der Schlauchabschnitt 3 dem so bestückten Presswerkzeug 71 der Presseinheit 7 über den ersten Greifer 22 lagerichtig zugeführt, wonach die Verpressung der Armatur 32 an dem Schlauchabschnitt 3 erfolgt.

Das so an einem Ende mit einer winklingen Armatur 32 versehene Schlauchabschnitt wird nachfolgend über das Transfersystem 21 der Wendevorrichtung 8 zugeführt, wo der Schlauchabschnitt 3 wiederum in definierter Position von einem zweiten Greifer 23 übernommen wird. Der zweite Greifer 23 ist als Radialgreifer ausgebildet. Der Schlauchabschnitt 3 wird nun mit dem zweiten Greifer 23 um einen gewünschten V-Winkel 36 rotiert und nachfolgend der weiteren Schälstation 6 zugeführt. Hier erfolgt in der zuvor beschriebenen Art und Weise eine Durchmesserreduzierung des freien Endes des Schlauchabschnitts 3, das nachfolgend in der zuvor beschriebenen Art und Weise an der zweiten Presseinheit 7 mit einer zweiten Armatur 33 versehen wird, die zuvor von einem Bediener in die entsprechende Matrize des Werkzeugrevolvermagazins 72 eingelegt worden ist.

Wesentlich ist, dass der von dem ersten Greifer 22 in definierter Position von der Transfergleitebene 2 aufgenommene Schlauchabschnitt 3 über das gesamte Transfersystem in seiner Lage nicht verändert wird; es erfolgen lediglich Übergaben an Greifer der einzelnen Stationen, wobei eine Freigabe durch den ersten Greifer 22 des Transfersystems 21 erst nach Übernahme durch den jeweiligen Greifer der jeweiligen Station erfolgt und umgekehrt. Hierdurch ist gewährleistet, dass die erste Armatur 32 in dem gewünschten K-Winkel 35 auf einem Ende des Schlauchabschnitts 3 appliziert wird. Erst nach Übernahme des Schlauchabschnitts 3 von dem zweiten Greifer 23 erfolgt eine definierte Rotation des Schlauchabschnitts 3 um den gewünschten K-Winkel 35, bevor die Applikation der zweiten winkligen Armatur 33 auf dem verbleibenden freien Ende des Schlauchabschnitts 3 erfolgt. Abschließend wird der Schlauchabschnitt 3 über den zweiten Greifer 23 der Laserbeschriftungsstation 9 zugeführt, wo eine Beschriftung wenigstens einer Armatur 32, 33 des Schlauchabschnitts 3 erfolgt.

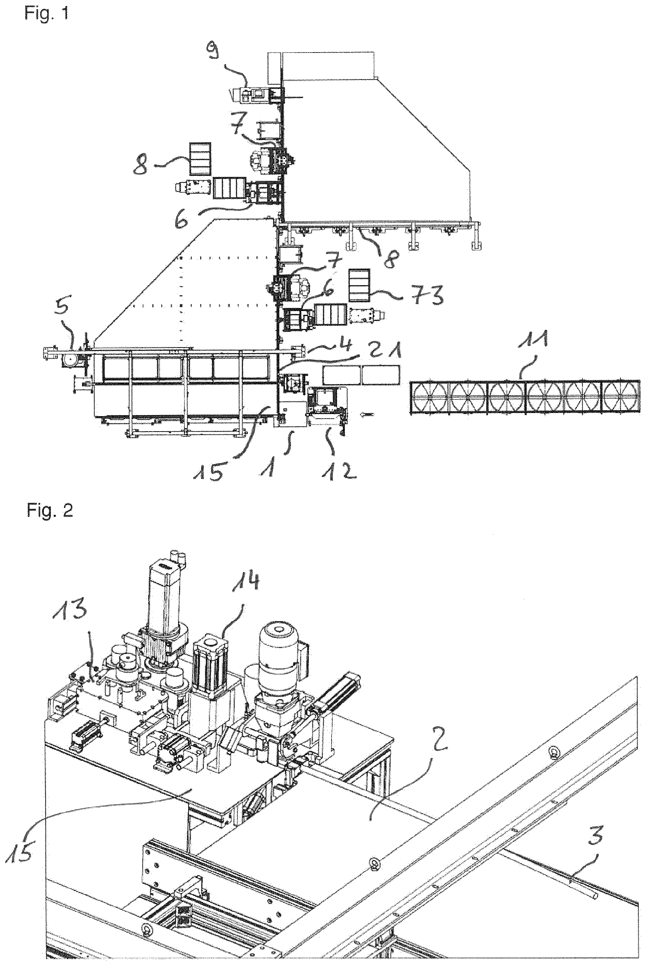

Selbstverständlich ist die Montage der beiden winkligen Armaturen 32, 33 auf dem Schlauchabschnitt 3 auch mit nur einer Schälstation und einer Presseinheit möglich. Hierbei wäre der Schlauchabschnitt 3 nach dessen definierter Rotation über den zweiten Greifer 23 wieder in entgegengesetzter Richtung zu bewegen. Die In-Line-Anordnung gemäß Figur 1 hat jedoch den Vorteil, dass nach Durchlaufen eines Schlauchabschnitts 3 der ersten Schälstation 6 bereits ein nachfolgender Schlauchabschnitt 3 dieser Schälstation 6 zugeführt werden kann, wodurch der Durchsatz der Fertigungslinie deutlich erhöht ist.

Es versteht sich von selbst, dass nicht sämtliche Stationen der Fertigungslinie gemäß Figur 1 zwingend erforderlich sind. So kann beispielsweise die Schutzschlauchstation 5 entfallen, sofern ein solcher Schutzschlauch bei dem herzustellenden Verbindungschlauch nicht erforderlich ist. Auch die Laserbeschriftungsstation 9 ist je nach gewünschter Ausführung des Verbindungsschlauchs nicht erforderlich. Darüber hinaus ist es auch denkbar, das Bedienpersonal der Presseinheiten 7 durch Roboter zu ersetzen, durch die dann die Zuführung der jeweils benötigten winkligen Armaturen 32, 33 in die Presseinheit 7 erfolgt.

## Patentansprüche

1. Vorrichtung zur Herstellung von Verbindungsschläuchen insbesondere für hydraulische Zwecke, umfassend eine Ablängeinheit zum definierten Ablängen eines von einer Haspel zugestellten Schlauchs, eine Ausrichteinheit und wenigstens eine Presseinheit zur Montage wenigstens einer winkligen Armatur, die über ein Transfersystem miteinander verbunden sind, **dadurch gekennzeichnet, dass** die Ausrichteinheit eine ebene Fläche umfasst, die derart unterhalb der Ablängeinheit (1) angeordnet ist, dass ein abgelängter gekrümmter Schlauchabschnitt (3) im freien Fall auf diese ablegbar ist, wobei das Transfersystem (2) einen Greifer (22) zur definierten Aufnahme des abgelegten gekrümmten Schlauchabschnitts (3) von der ebenen Fläche sowie zur Zustellung des Schlauchabschnitts zu der Presseinheit (7) umfasst.

2. Vorrichtung nach Anspruch 1, **dadurch gekennzeichnet, dass** eine optische Kontrolleinheit zur Feststellung des Lagesinns des Schlauchabschnitts (3) vorhanden ist.

3. Vorrichtung nach Anspruch 1 oder 2, **dadurch gekennzeichnet, dass** eine Markierungsvorrichtung zur Aufbringen einer Referenzmarke auf den abgelegten Schlauchabschnitt (3) angeordnet ist.

4. Vorrichtung nach einem der vorgenannten Ansprüche, **dadurch gekennzeichnet, dass** der Presseinheit (7) vorgelagert ein Schälmodul (6) zur endseitigen Außendurchmesserreduzierung eines von einem Greifer (22, 61) zugeführten Schlauchabschnitts (3) umfasst.

5. Vorrichtung nach einem der vorgenannten Ansprüche, **dadurch gekennzeichnet, dass** die Presseinheit (7) ein Werkzeugrevolvermagazin zur Applizierung von Armaturen (32, 33) unterschiedlicher Winkel und Durchmesser umfasst.

6. Vorrichtung nach einem der vorgenannten Ansprüche, **dadurch gekennzeichnet, dass** eine zweite Presseinrichtung (7) angeordnet ist, wobei das Transfersystem (21) zur definierten Rotation eines aufgenommenen Schlauchabschnitts (3) eingerichtet ist.

7. Vorrichtung nach Anspruch 6, **dadurch gekennzeichnet, dass** das Transfersystem (21) eine zweiten Greifer (23), vorzugsweise einen Radialgreifer zur definierten Rotation eines von dem ersten Greifer (22) aufgenommenen Schlauchabschnitts (3) umfasst.

8. Verfahren zur endseitigen Bestückung eines gekrümmten Schlauchabschnitts (3) mit einer abgewinkelten Armatur (32, 33), **dadurch gekennzeichnet, dass** der Schlauchabschnitt (3) zunächst im freien Fall auf eine horizontale Ebene verbracht wird, wodurch er in eine Referenzlage mit bekannter Richtung der Null-Grad-Sehne verbracht wird, nachfolgend der Schlauchabschnitt (3) in dieser Referenzlage von einem ersten Greifer (22) aufgenommen wird, wonach der Schlauchabschnitt (3) über den Greifer (22) in einem gewünschten K-Winkel (35) zur Null-Grad-Sehne rotiert wird, wobei anschließend die abgewinkelte Armatur (32) auf ein Ende des so positionierten Schlauchabschnitts aufgebracht wird.

9. Verfahren nach Anspruch 8, **dadurch gekennzeichnet, dass** der an einem Ende mit einer ersten abgewinkelten Armatur (32) versehene Schlauchabschnitt um einen definierten V-Winkel (36) relativ zur Ausgangsstellung weiterrotiert wird, wonach das freie Ende des Schlauchabschnitts (3) mit einer zweiten abgewinkelten Armatur (33) versehen wird.

10. Verfahren nach Anspruch 9, **dadurch gekennzeichnet, dass** der mit einer ersten abgewinkelten Armatur (32) versehene Schlauchabschnitt (3) von einem Radialgreifer (23) aufgenommen wird, wonach der erste Greifer (22) den Schlauchabschnitt (3) freigibt und der Schlauchabschnitt (3) über den Radialgreifer (23) um den gewünschten V-Winkel (36) rotiert wird, wonach der Schlauchabschnitt (3) von dem ersten Greifer (22) eingespannt und anschließend von dem Radialgreifer (23) freigegeben wird, wonach die Applikation des Schlauchabschnitts (3) mit der zweiten abgewinkelten Armatur (33) erfolgt.

## Claims

1. Device for producing connection hoses, particularly for hydraulic purposes, comprising a cutting unit for the defined cutting to length of a hose delivered from a reel, an alignment unit and at least one press unit for mounting at least one angled fitting, which are connected to one another via a transfer system, **characterised in that** the alignment unit comprises a flat surface, which is arranged below the cutting unit (1) in such a manner that a cut-to-length curved hose section (3) can be placed on it in free fall, wherein the transfer system (2) comprises a gripper (22) for the defined take-up of the deposited curved hose section (3) from the flat surface as well as the delivery of the hose section to the press unit (7).

2. Device according to claim 1, **characterised in that** an optical control unit for detecting the sense of position of the hose section (3) is provided.

3. Device according to claim 1 or 2, **characterised in that** a marking device for applying a reference mark on the deposited hose section (3) is arranged.

4. Device according to one of the previous claims, **characterised in that** upstream of the press unit (7) a peeling module (6) for the reduction of outer diameter at the end of a hose section (3) delivered by a gripper (22, 61) is comprised.

5. Device according to one of the previous claims, **characterised in that** the press unit (7) comprises a turret magazine for the application of fittings (32, 33) of different angles and diameters.

6. Device according to one of the previous claims, **characterised in that** a second press unit (7) is arranged, wherein the transfer system (21) is adapted for the defined rotation of a received hose section (3).

7. Device according to claim 6, **characterised in that** the transfer system (21) comprises a second gripper (23), preferably a radial gripper for the defined rotation of a hose section (3) taken up by the first gripper (22).

8. Method for fitting the end of a curved hose section (3) with an angled fitting (32, 33), **characterised in that** the hose section (3) is first moved in free fall onto a horizontal plane, whereby it is moved into a reference position with the known direction of the zero-degree axis, the hose section (3) is subsequently taken up in this reference position by a first gripper (22), after which the hose section (3) is rotated by the gripper (22) in a desired K-angle (35) relative to the zero-degree axis, wherein subsequently the angled fitting (32) is fitted on one end of the hose section thus positioned.

9. Method according to claim 8, **characterised in that** the hose section provided on one end with a first angled fitting (32) is further rotated about a defined V-angle (36) relative to the initial position, after which the free end of the hose section (3) is provided with a second angled fitting (33).

10. Method according to claim 9, **characterised in that** the hose section (3) provided with a first angled fitting (32) is taken up by a radial gripper (23), after which the first gripper (22) releases the hose section (3) and the hose section (3) is rotated by the radial gripper (23) about the desired V-angle (36), after which the hose section (3) is clamped by the first gripper (22) and subsequently released by the radial gripper (23), after which the hose section (3) is fitted with the second angled fitting (33).

## Revendications

1. Procédé de production de tuyaux flexibles de raccordement, notamment à des fins hydrauliques, comprenant une unité de tronçonnage servant à tronçonner à une longueur définie un tuyau flexible amené par un dévidoir, une unité d'alignement et au moins une unité de sertissage pour monter au moins un tube coudé, qui sont reliés ensemble via un système de transfert, **caractérisé en ce que** l'unité d'alignement comprend une surface plane disposée de telle sorte en dessous de l'unité de tronçonnage (1) qu'un segment (3) de tuyau flexible incurvé est déposable en chute libre sur cette surface plane, sachant que le système de transfert (2) comprend un préhenseur (22) saisissant de manière définie sur la surface plane le segment (3) de tuyau flexible incurvé et amenant le segment de tuyau flexible à l'unité de sertissage (7).

2. Dispositif selon la revendication 1, **caractérisé en ce qu'**une unité de contrôle optique est présente pour constater dans quel sens repose le segment (3) de tuyau flexible.

3. Dispositif selon la revendication 1 ou 2, **caractérisé en ce qu'**est disposé un dispositif de marquage servant à apposer une marque de référence sur le segment (3) de tuyau flexible déposé.

4. Dispositif selon l'une des revendications précédentes, **caractérisé en ce que** l'unité de sertissage (7) présente en amont un module à peler (6) servant à réduire à une extrémité le diamètre extérieur d'un segment (3) de tuyau flexible amené par un préhenseur (22, 61).

5. Dispositif selon l'une des revendications précédentes, **caractérisé en ce que** l'unité de sertissage (7) comprend un magasin rotatif à outils servant à appliquer des tubes (32, 33) d'angles et de diamètres différents.

6. Dispositif selon l'une des revendications précédentes, **caractérisé en ce qu'**est disposé un second dispositif de sertissage (7), sachant que le système de transfert (21) est ajusté pour imprimer une rotation définie à un segment (3) de tuyau flexible saisi.

7. Dispositif selon la revendication 6, **caractérisé en ce que** le système de transfert (21) comprend un second préhenseur (23), de préférence un préhenseur radial, servant à imprimer une rotation définie à un segment (3) de tuyau flexible saisi par le premier préhenseur (22).

8. Procédé servant à équiper les extrémités d'un segment (3) de tuyau flexible incurvé avec un tube coudé (32, 33), **caractérisé en ce que** le segment (3) de tuyau flexible est dans un premier temps amené en chute libre sur un plan horizontal, faisant qu'il est amené dans une position de référence dont la direction de la corde zéro degré est connue, qu'ensuite le segment (3) de tuyau flexible se trouvant sur cette position de référence est saisie par un premier préhenseur (22), qu'ensuite le préhenseur (22) imprime au segment (3) de tuyau flexible une rotation l'amenant sur un angle K (35) voulu par rapport à la corde zéro degré, sachant qu'ensuite le tube coudé (32) est monté sur une extrémité du segment de tuyau flexible ainsi positionné.

9. Procédé selon la revendication 8, **caractérisé en ce qu'**est imprimée au segment de tuyau flexible muni à une extrémité d'un premier tube coudé (32) un mouvement rotatif de continuation selon un angle défini V (36) par rapport à la position de départ, sachant qu'ensuite l'extrémité libre du segment (3) de tuyau flexible est munie d'un second tube coudé (33).

10. Procédé selon la revendication 9, **caractérisé en ce que** le segment (3) de tuyau flexible muni d'un premier tube coudé (32) est saisi par un préhenseur radial (23), qu'ensuite le premier préhenseur (22) libère le segment (3) de tuyau flexible et que le préhenseur radial (23) imprime au segment (3) de tuyau flexible une rotation selon l'angle V (36) voulu, qu'ensuite le premier préhenseur (22) serre le segment (3) de tuyau flexible et qu'ensuite le préhenseur radial (23) libère ce dernier, ce après quoi le segment (3) de tuyau flexible est équipé du second tube coudé (33).
